# EUROPÄISCHE PATENTSCHRIFT

(11) **EP 1 868 962 B1**
(45) Veröffentlichungstag und Bekanntmachung des Hinweises auf die Patenterteilung: **24.11.2010**
(21) Anmeldenummer: 06725299.9
(22) Anmeldetag: 24.03.2006
(51) Int. Cl.: C04B 41/85, F23Q 7/00, G01N 27/407

(54) **KERAMISCHE GLÜHSTIFTKERZE**
CERAMIC GLOW PLUG
BOUGIE DE RÉCHAUFFAGE EN CERAMIQUE

(30) Priorität: 05.04.2005 DE 102005015569
(43) Veröffentlichungstag der Anmeldung: 26.12.2007
(73) Patentinhaber: ROBERT BOSCH GMBH, 70442 Stuttgart (DE)
(72) Erfinder: OBERLE, Juergen, 71065 Sindelfingen (DE); SCHNEIDER, Jens, F-12004 Rodez-Cedex (FR); MONDAL, Pia, 82431 Kochel am See (DE); BRINZ, Thomas, 73266 Bissingen a.d. Teck (DE); RAU, Christof, 66636 Tholey (DE); ULLMANN, Ilona, 70825 Korntal-Muenchingen (DE); SCHLUCKWERDER, Heike, 70567 Stuttgart (DE); JOCKEL, Joerg, 70839 Gerlingen (DE); WAGNER, Sigrid, 70186 Stuttgart (DE)
(86) Internationale Anmeldenummer: PCT/EP2006/061029
(87) Internationale Veröffentlichungsnummer: WO 2006/106047

(56) Entgegenhaltungen:
- WO-A-03/027465
- US-A1- 2002 063 118

## Beschreibung

### Stand der Technik

Die Erfindung bezieht sich auf eine keramische Glühstiftkerze nach dem Oberbegriff des Anspruchs 1.

Aus der EP 412 428 B1 ist bekannt, dass keramische Verbundkörper aus einem siliciumorganischen Polymer durch eine geeignete Pyrolyse hergestellt werden können. Werden derartige Verbundkörper jedoch in Widerstands- oder Sensorelementen eingesetzt, die korrosiven Gasgemischen wie beispielsweise Abgasen von Verbrennungsmotoren ausgesetzt sind, so muss die Keramik vor korrosiven Einflüssen geschützt werden. Zwar bilden übliche Keramiken beispielsweise auf der Basis von Siliciumnitrid, Siliciumcarbid oder auf der Basis von Siliciumoxycarbiden in Kontakt mit sauerstoffhaltigen Gasatmosphären bei erhöhten Temperaturen eine selbstschützende, oxidische, glasartige Schicht an ihrer Oberfläche aus; diese Schicht ist jedoch normalerweise relativ dünn und hält beispielsweise einer Dauerbelastung durch Einwirkung von Abgasen von Verbrennungsmotoren nicht zuverlässig stand.

Wird ein keramisches Widerstandselement beispielsweise als Heizelement in Glühstiftkerzen eingesetzt, so besteht die Gefahr, dass sich beispielsweise bei nicht optimierter Verbrennung Rußablagerungen am Glühstift bilden (Verkokung). Diese Verkokung kann eine spätere Demontage der Glühstiftkerze erschweren. Ist der außen liegende Teil der keramischen Glühstiftkerze elektrisch leitfähig, so können Rußablagerungen eine Leiterbahn zum Gehäuse ausbilden, wodurch die Glühstiftkerze ggf. nicht mehr korrekt betrieben werden kann bzw. integrierte Sensorfunktionen der Glühstiftkerze (wie z.B. lonenstrommessung) nicht mehr gewährleistet sind.

Weiterhin ist aus US 2002/0063118 A1 eine keramische Glühstiftkerze mit einem keramischen Substrat bekannt, das mit eine Schutzschicht aus einer Siliziumkeramik mit darin enthaltenen Seltenerdoxiden versehen ist, wobei als Seltenerdoxide die des Ytterbium, des Lanthan oder des Yttrium eingesetzt werden. Mit den Seltenerdoxiden wird beabsichtigt, das Entstehen von Sulfaten aufgrund von Verunreinigungen zu verhindern, welche den Schmelzpunkt der Keramik herabsetzen können.

Aufgabe der vorliegenden Erfindung ist es, eine keramische Glühstiftkerze bereitzustellen, die Langzeitanwendungen bei höheren Temperaturen standhält.

### Vorteile der Erfindung

Die der Erfindung zugrunde liegende Aufgabe wird dadurch gelöst, dass das keramische Substrat der keramischen Glühstiftkerze mit einer Beschichtung versehen ist, die Kupfer, Cer und/oder Vanadium enthält, wobei der Gesamtgehalt an Verbindungen des Kupfers, Cer bzw. Vanadium mehr als 85 Gew.% beträgt.

Um die keramische Glühstiftkerze gegenüber einer Verkokung zumindest weitgehend resistent zu gestalten, ist die Beschichtung so ausgeführt, dass ein Abbrand von angelagertem Ruß auch bei moderaten Temperaturen ermöglicht wird, wie sie bspw. bei Verbrennungsprozessen im Brennraum herrschen können. Auf diese Weise wird wirksam verhindert, dass sich leitende Strukturen zum Gehäuse der Glühstiftkerze hin bilden. Darüber hinaus kann durch die Beschichtung katalytisch die Entflammungstemperatur des Kraftstoffes herabgesetzt werden, sodass die Glühstiftkerze bereits bei tieferen Temperaturen betrieben werden kann und sich somit deren Lebensdauer erhöht.

Mit den in den Unteransprüchen aufgeführten Maßnahmen sind vorteilhafte Weiterbildungen der erfindungsgemäßen keramischen Glühstiftkerze möglich.

So ist es von besonderem Vorteil, wenn der Gehalt an Verbindungen des Kupfers, Cer bzw. Vanadium beispielsweise mehr als 90 Gew.% beträgt. Weiterhin kann die Beschichtung Oxide der Elemente Zirkon, Titan, Aluminium, Yttrium, Chrom und/oder Calcium enthalten. Auf diese Weise werden Beschichtungen erzielt, die aufgrund der zugesetzten Oxide langzeitstabil sind, und die wirksam den Abbrand von abgelagertem Ruß katalysieren.

Darüber hinaus kann die Beschichtung bis zu 10 Gew.% der Elemente Platin, Palladium und/oder Rhodium umfassen. Auf diese Weise lässt sich die Beschichtung auf das konkrete Anwendungsgebiet der keramischen Glühstiftkerze ausrichten.

Weiterhin ist von Vorteil, wenn das keramische Substrat der keramischen Glühstiftkerze eine durch Pyrolyse eines siliciumorganischen Polymers erzeugte Keramik umfasst, da die katalytische Aktivität der Beschichtung auf der dabei resultierenden SiOC-Keramik besonders ausgeprägt ist.

In einer besonders vorteilhaften Ausführungsform der vorliegenden Erfindung ist zwischen der Beschichtung und dem keramischen Substrat eine weitere Beschichtung vorgesehen, die glasartig oder teilkristallin ausgeführt ist. Diese Beschichtung dient insbesondere dem Schutz der Keramik vor den korrosiven Einflüssen, wie sie beispielsweise bei der Einwirkung von Abgasen von Verbrennungsmotoren auftreten können.

### Zeichnung

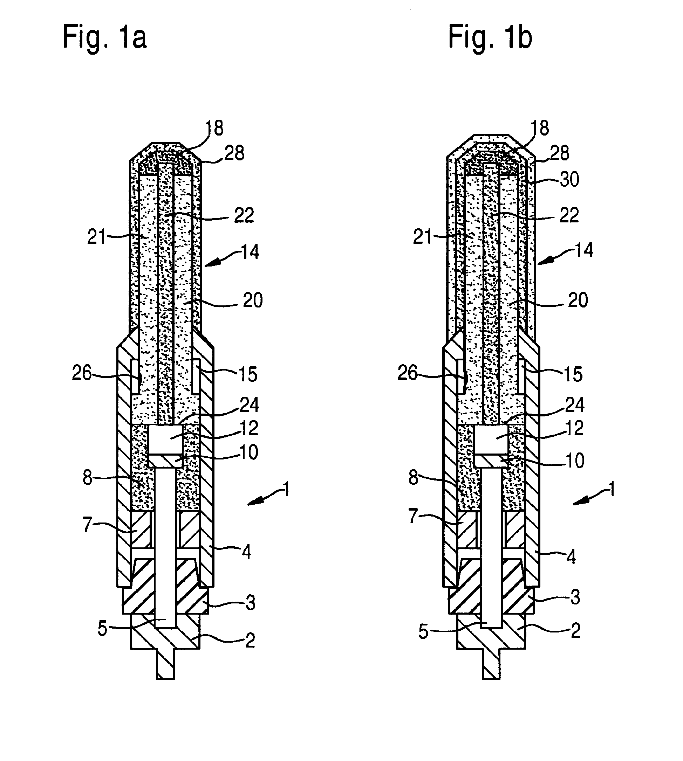

Zwei Ausführungsbeispiele der Erfindung sind in der Zeichnung dargestellt und in der nachfolgenden Beschreibung näher erläutert. Es zeigt Figur 1a ein erstes Ausführungsbeispiel einer Glühstiftkerze im Längsschnitt, die ein Widerstandselement gemäß vorliegender Erfindung enthält und Figur 1b ein zweites Ausführungsbeispiel einer Glühstiftkerze im Längsschnitt, die ein Widerstandselement gemäß vorliegender Erfindung enthält.

### Ausführungsbeispiele

Figur 1a zeigt einen Längsschnitt durch eine ein erfindungsgemäßes keramisches Widerstandselement enthaltende Ausführungsform einer Glühstiftkerze 1. An einem brennraumfernen Ende der Glühstiftkerze 1 erfolgt über eine elektrische Kontaktierung über einen Rundstecker 2, der über eine Dichtung von einem metallischen Kerzengehäuse 4 getrennt mit einer zylinderförmigen Zuleitung 5 verbunden ist. Die Fixierung der zylindrischen Zuleitung 5 im Kerzengehäuse 4 erfolgt über einen Metallring 7 und eine elektrisch isolierende Keramikhülse 8. Die zylinderförmige Zuleitung 5 ist über einen Kontaktstift 10 und ein geeignetes Kontaktierungselement 12, das vorzugsweise als Kontaktfeder, als elektrisch leitfähige Pulverpackung oder als elektrisch leitfähige Tablette mit einem elastischen Federanteil, vorzugsweise aus Graphit, ausgebildet ist, mit einem keramischen Glühstift 14 verbunden. Die zylinderförmige Zuleitung 5 kann auch mit dem Kontaktstift 10 in einem Bauteil vereinigt sein. Das Innere der Glühstiftkerze wird mittels einer Dichtpackung 15 gegenüber dem Brennraum abgedichtet. Die Dichtpackung 15 besteht aus einer elektrisch leitenden Kohlenstoffverbindung. Die Dichtpackung 15 kann aber auch durch Metalle, eine Mischung aus Kohlenstoff und Metall oder eine Mischung aus Keramik und Metall ausgebildet sein.

Die Glühstiftkerze umfasst weiterhin ein Widerstandselement in Form eines Glühstifts 14, der aus einer keramischen Heizschicht 18 und keramischen Zuleitungsschichten 20 und 21 gebildet ist, wobei die beiden Zuleitungsschichten 20, 21 durch die Heizschicht 18 verbunden sind und mit der Heizschicht 18 zusammen eine Leitschicht bilden. Die Zuleitungsschichten 20, 21 besitzen eine beliebige Form, auch die Heizschicht 18 kann eine beliebige Form besitzen. Vorzugsweise ist die Leitschicht U-förmig ausgebildet. Die Zuleitungsschichten 20, 21 sind über eine Isolationsschicht 22, die ebenfalls aus keramischem Material besteht, voneinander getrennt. In dem in Figur 1 dargestellten Ausführungsbeispiel ist der Glühstift 14 derart gestaltet, dass die Zuleitungsschichten 20 und 21 sowie die Heizschicht 18 auf der Außenseite des Glühstifts 14 angeordnet sind. Es ist jedoch auch möglich, zumindest die Zuleitungsschichten 20 und 21 so anzuordnen, dass sie sich innerhalb des Glühstiftes 14 befinden und noch von einer außen liegenden, keramischen, isolierenden Schicht bedeckt werden. Innerhalb des Kerzengehäuses 4 ist der keramische Glühstift 14 durch eine nicht dargestellte Glasschicht von den übrigen Bestandteilen der Glühstiftkerze 4, 8, 12, 15 isoliert.

Um den elektrischen Kontakt zwischen dem Kontaktierungselement 12 und der Zuleitungsschicht 20 herzustellen, ist die Glasschicht an der Stelle 24 unterbrochen. Eine weitere Durchbrechung der Glasschicht an der Stelle 26 ermöglicht einen elektrischen Kontakt zwischen Zuleitungsschicht 21 und Kerzengehäuse 4 über die Dichtpackung 15. In diesem Ausführungsbeispiel wurde als bevorzugte Ausführungsform die Heizschicht 18 an der Spitze des Glühstiftes 14 platziert. Es ist jedoch auch denkbar, die Heizschicht 18 an einer anderen Stelle der Leitschicht zu platzieren. Die Heizschicht 18 sollte sich an der Stelle befinden, an der die größte Heizwirkung erzielt werden soll.

Das Material der Heizschicht 18 wird so gewählt, dass der absolute elektrische Widerstand der Heizschicht 18 größer ist als der absolute elektrische Widerstand der Zuleitungsschichten 20, 21. Um Querströme zwischen den Komponenten der Leitschicht zu vermeiden, ist der Widerstand der Isolationsschicht 22 vorzugsweise deutlich größer als der Widerstand der Heizschicht 18 und der Zuleitungsschichten 20, 21.

In einem bevorzugten Ausführungsbeispiel ist der spezifische Widerstand der Isolationsschicht 22 im gesamten Betriebsbereich der Glühstiftkerze mindestens 10 mal größer als der spezifische Widerstand der Heizschicht 18.

Die Zusammensetzungen der Isolationsschicht, der Zuleitungsschichten und der Heizschicht werden in den oben angegebenen Ausführungsbeispielen so gewählt, dass ihre thermischen Ausdehnungskoeffizienten und die während des Sinter- bzw. Pyrolyseprozesses auftretenden Schrumpfungen der einzelnen Zuleitungs-, Heiz- und Isolationsschichten möglichst gleich sind, so dass keine Risse im Glühstift entstehen.

Die Heizschicht 18 ist aus einer elektrisch leitfähigen Keramik mit einem hohen elektrischen Widerstand ausgeführt. Dabei handelt es sich vorzugsweise um einen keramischen Widerstand auf der Basis eines mit Füllstoffen versehenen siliciumorganischen Polymers, wie beispielsweise eines Polysiloxans oder eines Polysilsesquioxans. Als Polysiloxan wird beispielsweise ein kondensationsvernetztes Polyalkoxysiloxan oder ein additionsvemetzendes Polysiloxan wie beispielsweise ein Methyl-Phenyl-Vinyl-Polysiloxan verwendet. Den verwendeten Polysiloxanen können weitere Polymere wie beispielsweise Polycarbosilane und Polysilane zugesetzt werden. Diese können in einem geeigneten Lösungsmittel wie beispielsweise Aceton oder Tetrahydrofuran gelöst und mit geeigneten Füllstoffen versetzt werden. Über die Auswahl und Zugabemenge eines oder mehrerer geeigneter Füllstoffe kann der elektrische Widerstand der resultierenden Keramik gezielt eingestellt werden. Geeignete Füllstoffe sind beispielsweise Molybdändisilicid, Chromdisilicid, Eisenpulver, Siliciumnitrid, Siliciumpulver, Titansilicid, Ceroxid, Bismuthoxid, Bariumoxid, Siliciumcarbid, Borcarbid, Bornitrid oder Graphit sowie ggf. auch Kohlenstoffnanoröhren oder Aluminiumoxid. Die Zuleitungsschichten 20,21 können in ähnlicher Weise ausgeführt werden, wobei deren elektrischer Widerstand beispielsweise durch Zusatz elektrisch leitfähiger Füllstoffe modifiziert werden kann.

Vor allem im Bereich der Heizschicht 18 besteht die Gefahr, dass es bedingt durch die im Brennraum ablaufenden Verbrennungsprozesse zu einer unerwünschten Verkokung der keramischen Oberfläche des Glühstiftes 14 kommt. Diese Gefahr besteht insbesondere dann, wenn der Glühstift nicht angesteuert wird oder die Verbrennungsprozesse nicht im Bereich eines optimalen Umsatzes stattfinden. Diese Verkokung kann eine spätere Demontage des Glühstiftes erschweren. Ist der außen liegende Teil des keramischen Glühstiftes elektrisch leitfähig, so können die Ablagerungen eine Leiterbahn zum Gehäuse ausbilden, wodurch ein korrekter Betrieb des Glühstifts beeinträchtigt werden kann bzw. integrierte Sensorfunktionen der Glühstiftkerze (wie z.B. eine Ionenstrommessung) nicht mehr gewährleistet sind.

Daher ist vorzugsweise auf den dem Verbrennungsraum ausgesetzten keramischen Außenflächen des Glühstifts eine Beschichtung 28 vorgesehen, die katalytisch aktiv ist und einen Abbrand sich anlagernder Rußpartikel bei niedrigen Temperaturen ermöglicht. Diese Beschichtung enthält als Hauptkomponenten Kupfer, Cer oder Vanadium bzw. Mischungen derselben. Dabei ist insbesondere ein Gesamtgehalt an Verbindungen des Kupfers, Cers bzw. Vanadium von mehr als 85 Gew.%, insbesondere mehr als 90 Gew.% von Vorteil. Vorzugsweise sind die genannten Elemente Kupfer, Cer und Vanadium in der Beschichtung 28 als Oxide enthalten, wobei Cer vorzugsweise als CeO₂ und/oder Ce₂O₃ vorliegt.

Ein weiterer Vorteil der katalytischen Beschichtung 28 ist darin zu sehen, dass die Entflammungstemperatur des im Verbrennungsraum verbrannten Kraftstoffes bedingt durch die katalytische Funktion der Beschichtung 30 ggf. herabgesetzt wird, sodass die Glühstiftkerze bei tieferen Temperaturen betrieben werden kann und sich somit deren Lebensdauer erhöht.

Die Beschichtung 28 kann darüber hinaus bis zu 20 Gew.%, insbesondere bis zu 10 Gew.% der Platinmetalle Platin, Palladium, Rhodium und/oder Iridium enthalten.

Weiterhin kann die Beschichtung 28 hochschmelzende Metalloxide beispielsweise der Elemente Zr, Ti, Al, Y, Cr oder Ca sowie Mischungen derselben enthalten, um einer möglichen Alterung der katalytisch aktiven Komponenten der Beschichtung entgegenzuwirken.

Die Schichtdicke der Beschichtung 28 beträgt vorzugsweise bis zu 50 µm, insbesondere 0,5 bis 10 µm. Es hat sich herausgestellt, dass die Beschichtung 28 insbesondere in der beschriebenen Zusammensetzung ihre katalytische Wirkung vor allem auf keramischen Substraten entwickelt, die auf der Basis siliciumorganischer Polymere hergestellt wurden.

Die Beschichtung 28 kann auf dem keramischen Substrat erzeugt werden, indem eine Dispersion oder Lösung der katalytisch aktiven Substanzen z.B. mittels Eintauchen (dip coating), Aufdrucken, Aufrollen, Imprägnieren oder durch Luftdruck- bzw. Ulitraschallvernebelung auf die Oberfläche des Stiftes aufgebracht wird und nachfolgend eine Wärmebehandlung an Luft bei Temperaturen von über 500°C, insbesondere bei 800 bis 1300°C bei einer Behandlungszeit von 0,25 bis 12 h unterzogen wird

Figur 1b zeigt ein weiteres Ausführungsbeispiel einer ein erfindungsgemäßes keramisches Widerstandselement enthaltenden Glühstiftkerze. Dabei bezeichnen gleiche Bezugszeichen gleiche Bauteilkomponenten wie in Figur 1a.

Die in Figur 1b dargestellte Glühstiftkerze umfasst ein Widerstandelement in Form des Glühstifts 14, der zwischen der Beschichtung 28 und dem keramischen Substrat in Form der keramischen Schichten 18, 20, 21 eine weitere Beschichtung 30 aufweist. Die weitere Beschichtung 30 wird durch eine Glas- bzw. Kompositschicht gebildet, die beispielsweise gasdicht, alkaliresistent und hochtemperaturstabil ausgeführt ist. Die Glas- bzw. Kompositschicht 30 enthält eine oder mehrere der folgenden Oxide Celsian, Mullit, Siliciumdioxid, Aluminiumoxid, und Calciumoxid. Zusätzlich kann die Schicht Anteile von Natrium oder Bor aufweisen. Die Schichtdicke der weiteren Beschichtung 30 beträgt vorzugsweise bis zu 20 µm, insbesondere 0,5 bis 10 µm. Die Aufbringung der weiteren Beschichtung 30 auf einer Glühstiftkerze erfolgt vorzugsweise auf eine ähnliche Art und Weise wie die Erzeugung der Beschichtung 28.

Die Beschichtungen 28, 30 können den Glühstift 14 teil- oder auch vollflächig bedecken. Dabei kann vorgesehen sein, dass die weitere Beschichtung 30 den Glühstift 14 in einem größeren Oberflächenbereich bedeckt als die Beschichtung 28. So kann die weitere Beschichtung 30 den Glühstift 14 beispielsweise im wesentlichen vollflächig bedecken, während hingegen die Beschichtung 28 lediglich im Bereich der Heizschicht 18 vorgesehen ist.

Werden beschichtete Glühstiftkerzen einem Langzeittest unterzogen, so zeigt sich, dass Glühstiftkerzen mit einer Beschichtung 28 im Bereich der Heizschicht 18, die Elemente wie bspw. Ir, Pt, Y, Ti, Zr, Cr, W, Mn, Fe, Co, Ni, Zn, Ga und andere ohne Zusatz von Kupfer, Cer oder Vanadium enthielten, erst bei Temperaturen über 585°C einen nennenswerten Abbrand des angelagerten Rußes zeigen, während kupferhaltige Beschichtungen 28 bereits bei Temperaturen von 515°C einen merklichen Abbrand der Rußbeschichtung bewirkten, vanadiumhaltige Beschichtungen 28 bereits bei Temperaturen von 450°C und kupfer- sowie vanadiumhaltige Beschichtungen 28 bereits bei Temperaturen zwischen 450°C und 515°C.

Das erfindungsgemäße keramische Widerstandselement ist nicht nur als Glühstift für Glühstiftkerzen in Dieselmotoren, Stand- und Zusatzheizungen geeignet, sondern auch für Heizvorrichtungen von Flammkerzen oder keramischen Gassensoren sowie für Hochtemperaturanwendungen. Insbesondere können auch keramische Außenflächen von elektrochemischen Sensorelementen zur Bestimmung von Gasen in Gasgemischen mit den beschriebenen Beschichtungen versehen sein.

## Patentansprüche

1. Glühstiftkerze mit einem keramischen Substrat (18, 20, 21), welche einer Gasatmosphäre aussetzbar ist, die Kohlenstoffverbindungen enthält, wobei das keramische Substrat (18, 20, 21) mit einer Beschichtung (28) versehen ist, **dadurch gekennzeichnet, dass** die Beschichtung (28) Kupfer, Cer und/oder Vanadium enthält, und dass der Gesamtgehalt an Verbindungen des Kupfers, Cers bzw. Vanadium mehr als 85 Gew.% beträgt.

2. Glühstiftkerze nach Anspruch 1, **dadurch gekennzeichnet, dass** die Beschichtung (28) zu über 90 Gew.% durch Verbindungen des Kupfers, Cers und/oder Vanadium gebildet ist.

3. Glühstiftkerze nach Anspruch 1 oder 2, **dadurch gekennzeichnet, dass** die Beschichtung (28) weiterhin Oxide der Elemente Zirkon, Titan, Aluminium, Yttrium, Chrom und/oder Calcium enthält.

4. Glühstiftkerze nach Anspruch 1, 2 oder 3, **dadurch gekennzeichnet, dass** die Beschichtung (28) zusätzlich bis zu 10 Gew.% der Elemente Platin, Palladium und/oder Rhodium enthält.

5. Glühstiftkerze nach einem der Ansprüche 1 bis 4, **dadurch gekennzeichnet, dass** die Beschichtung (28) Cer in Form von CeO₂ und/oder Ce₂O₃ enthält.

6. Glühstiftkerze nach einem der vorhergehenden Ansprüche, **dadurch gekennzeichnet, dass** die Beschichtung (28) eine Schichtdicke von 0.5 bis 50 µm aufweist.

7. Glühstiftkerze nach einem der vorhergehenden Ansprüche, **dadurch gekennzeichnet, dass** das Substrat (18, 20, 21) eine durch Pyrolyse eines siliciumorganischen Polymers erzeugte Keramik umfasst.

8. Glühstiftkerze nach einem der vorhergehenden Ansprüche, **dadurch gekennzeichnet, dass** das Substrat (18, 20, 21) Siliciumnitrid umfasst.

9. Glühstiftkerze nach einem der vorhergehenden Ansprüche, **dadurch gekennzeichnet, dass** das Substrat als Füllstoff Siliciumcarbid, Molybdändisilicid, Chromdisilicid, Molybdäncarbid, Eisen, Silicium, Aluminiumoxid und/oder Graphit enthält.

10. Glühstiftkerze nach einem der vorhergehenden Ansprüche, **dadurch gekennzeichnet, dass** zwischen der Beschichtung (28) und dem keramischen Substrat (18, 20, 21) eine weitere Beschichtung (30) vorgesehen ist, die glasartig oder teilkristallin ausgeführt ist.

11. Glühstiftkerze nach einem der vorhergehenden Ansprüche, **dadurch gekennzeichnet, dass** die weitere Beschichtung (30) Mullit, Celsian, Siliciumdioxid, Aluminiumdioxid oder Calciumoxid enthält.

## Claims

1. Sheathed-element glow plug which has a ceramic substrate (18, 20, 21) and can be exposed to a gas atmosphere containing carbon compounds, wherein the ceramic substrate (18, 20, 21) is provided with a coating (28), **characterized in that** the coating (28) contains copper, cerium and/or vanadium, and **in that** the total content of compounds of the copper, cerium and/or vanadium is more than 85% by weight.

2. Sheathed-element glow plug according to Claim 1, **characterized in that** more than 90% by weight of the coating (28) is formed by compounds of the copper, cerium and/or vanadium.

3. Sheathed-element glow plug according to Claim 1 or 2, **characterized in that** the coating (28) furthermore contains oxides of the elements zirconium, titanium, aluminium, yttrium, chromium and/or calcium.

4. Sheathed-element glow plug according to Claim 1, 2 or 3, **characterized in that** the coating (28) additionally contains up to 10% by weight of the elements platinum, palladium and/or rhodium.

5. Sheathed-element glow plug according to one of Claims 1 to 4, **characterized in that** the coating (28) contains cerium in the form of CeO₂ and/or Ce₂O₃.

6. Sheathed-element glow plug according to one of the preceding claims, **characterized in that** the layer thickness of the coating (28) is 0.5 to 50 µm.

7. Sheathed-element glow plug according to one of the preceding claims, **characterized in that** the substrate (18, 20, 21) comprises a ceramic produced by pyrolysis of an organosilicon polymer.

8. Sheathed-element glow plug according to one of the preceding claims, **characterized in that** the substrate (18, 20, 21) comprises silicon nitride.

9. Sheathed-element glow plug according to one of the preceding claims, **characterized in that** the substrate contains, as filler, silicon carbide, molybdenum disilicide, chromium disilicide, molybdenum carbide, iron, silicon, aluminium oxide and/or graphite.

10. Sheathed-element glow plug according to one of the preceding claims, **characterized in that** a further coating (30) which is vitreous or partly crystalline is provided between the coating (28) and the ceramic substrate (18, 20, 21).

11. Sheathed-element glow plug according to one of the preceding claims, **characterized in that** the further coating (30) contains mullite, celsian, silicon dioxide, aluminium dioxide or calcium oxide.

## Revendications

1. Bougie de préchauffage dotée d'un substrat en céramique (18, 20, 21) qui peut être exposé à une atmosphère gazeuse qui contient des composés du carbone, le substrat en céramique (18, 20, 21) étant doté d'un revêtement (28),
**caractérisée en ce que**
le revêtement (28) contient du cuivre, du cérium et/ou du vanadium et
**en ce que** la teneur totale en composés du cuivre, du cérium ou du vanadium en représente plus de 85 % en poids.

2. Bougie de préchauffage selon la revendication 1, **caractérisée en ce que** le revêtement (28) est formé de jusqu'à plus de 90 % en poids de composés du cuivre, du cérium et/ou du vanadium.

3. Bougie de préchauffage selon les revendications 1 ou 2, **caractérisée en ce que** le revêtement (28) contient en outre des oxydes des éléments zirconium, titane, aluminium, yttrium, chrome et/ou calcium.

4. Bougie de préchauffage selon les revendications 1, 2 ou 3, **caractérisée en ce que** le revêtement (28) contient de plus jusqu'à 10 % en poids des éléments platine, palladium et/ou rhodium.

5. Bougie de préchauffage selon l'une des revendications 1 à 4, **caractérisée en ce que** le revêtement (28) contient du cérium sous la forme de CeO₂ et/ou de Ce₂O₃.

6. Bougie de préchauffage selon l'une des revendications précédentes, **caractérisée en ce que** le revêtement (28) a une épaisseur de 0,5 à 50 µm.

7. Bougie de préchauffage selon l'une des revendications précédentes, **caractérisée en ce que** le substrat (18, 20, 21) comprend une céramique formée par pyrolyse d'un polymère organique du silicium.

8. Bougie de préchauffage selon l'une des revendications précédentes, **caractérisée en ce que** le substrat (18, 20, 21) contient du nitrure de silicium.

9. Bougie de préchauffage selon l'une des revendications précédentes, **caractérisée en ce que** le substrat contient comme charge du carbure de silicium, du disiliciure de molybdène, du disiliciure de chrome, du carbure de molybdène, du fer, du silicium, de l'oxyde d'aluminium et/ou du graphite.

10. Bougie de préchauffage selon l'une des revendications précédentes, **caractérisée en ce qu'**un autre revêtement (30) vitrifié ou partiellement cristallin est prévu entre le revêtement (28) et le substrat céramique (18, 20, 21).

11. Bougie de préchauffage selon l'une des revendications précédentes, **caractérisée en ce que** l'autre revêtement (30) contient de la mullite, du celsian, du dioxyde de silicium, du dioxyde d'aluminium ou de l'oxyde de calcium.
